# EUROPEAN PATENT APPLICATION

(11) **EP 1 993 286 A1**
(43) Date of publication of application: **19.11.2008**
(21) Application number: 07713552.3
(22) Date of filing: 05.03.2007
(51) Int. Cl.: H04N 7/173, H04N 7/26

(54) **DYNAMIC IMAGE DISTRIBUTION SYSTEM AND CONVERSION DEVICE**

(30) Priority: 07.03.2006 JP 2006061149
(71) Applicant: NEC Corporation, Minato-ku Tokyo 108-8001 (JP)
(72) Inventor: WATANABE, Kazuteru c/o NEC Corporation, Minato-Ku Tokyo 1088001 (JP); OZAWA, Kazunori c/o NEC Corporation, Minato-Ku Tokyo 1088001 (JP); KOYAMA, Kazuhiro c/o NEC Corporation, Minato-Ku Tokyo 1088001 (JP)
(74) Representative: Betten & Resch
(86) International application number: PCT/JP2007/000170
(87) International publication number: WO 2007/105362

(57) **Abstract**

A moving image distribution system of the present invention is a moving image distribution system for distributing one or more streams through a transmission path 104 and a transmission path 105 to a terminal 103, and has a converter configured to posting a predetermined capability information to the terminal 103 side, and receiving at least one stream from a delivery server 801 having streams stored therein, or receiving a plurality of streams from a plurality of delivery servers 801,and converting a syntax of the streams so as to adapt it to the capability information, and the sending them through the transmission path 105 to the terminal 103.

## Description

### TECHNICAL FIELD

The present invention relates to a moving image distribution system and a conversion device, and in particular to a moving image distribution system and a conversion device distributing video bitstreams, coded using various coding tools and stored in a delivery server, and sending them through a network to a terminal, after rapidly converting a syntax thereof while keeping high picture quality.

### BACKGROUND ART

ITU-T (International Telecommunication Union-Telecommunication Standardization Sector) Recommendations H.261 and H.263, and MPEG-4 internationally standardized by ISO/IEC have been known in recent years as moving image compression coding system by which moving image signals can efficiently be transmitted at a low bit rate. Also H. 264/MPEG-4 AVC internationally standardized by ITU-T and ISO/IEC has been attracting public attention, by virtue of its higher efficiency in transmission of moving image signals, as compared with the moving image compression coding system.

In the moving image compression coding system, "Profile" which are subsets of coding tools according to the individual standards are specified, allowing the user to freely select on/off of the coding tools within the scope of "Profile", when video bitstreams (referred to as "moving image data") are produced. Depending on such on/off of these coding tools, even the same moving image compression coding system will result in different syntax of the moving image data.

For an exemplary case of distribution of moving image data stored in a delivery server to a terminal through a circuit switched network (referred to as "CS network", hereinafter), capability exchange such as being specified typically by ITU-T recommendation H.245 is carried out in call procedure. For another exemplary case of distribution of moving image data stored in a delivery server to a terminal through a packet exchange network (referred to as "PS network", hereinafter), capability exchange such as being specified typically by IETF (Internet Engineering Task Force) recommendation SDP is carried out in call procedure. Moving image data reproducible on the terminal, even including on/off of the coding tools, is unconditionally determined typically by the moving image compression coding system posted to the terminal through the capability information exchange, and by capability information (DCI, for example) of the moving image data.

One possible method may be such as carrying out capability information exchange prior to every send procedure of moving image data to be distributed, but the method will raise a problem of increase in intervals of data distribution of the individual moving image data.

Therefore, for the case where the moving image data stored in the delivery server are coded using various coding options, any trial of distributing a plurality of moving image data during a single call procedure raises a need of converting each moving image data into moving image data having a syntax adapted to coding information already posted to the terminal.

Japanese Laid-Open Patent Publication No. 2002-16916 describes an image transmission apparatus by which disconnection of communication becomes no more necessary, when the coding option is altered after start of the image communication.

Another problem is such that, for the case where it is posted that the coding tool contained in the moving image data distributed from the terminal based on the capability information exchange is not supported by the terminal, the terminal must post coding information decodable by the terminal, and the moving image data to be distributed must be converted into moving image having a syntax decodable by the terminal.

A conventional practice of distribution is therefore such as once decoding each moving image data stored in the delivery server, and then re-encoding it to produce a syntax of the coding information already posted to the terminal.

The practice, however, suffers from a problem in that the decoding and re-encoding of each moving image data degrades picture quality, and increases process load of the converter.

### DISCLOSURE OF THE INVENTION

Accordingly the prior art described in the above-mentioned document has a room for improvement in the following aspects.
A first problem of the prior art is degradation in the picture quality, possibly occurs in the process of conversion of the moving image data to produce an unique coding information already posted to the terminal in a call procedure, for the case where the moving image data coded using various coding tools are to be distributed in a call procedure through a network such as CS network or PS network.

This is because the individual moving image data once decoded generates quantization error. Another reason is that the error is emphasized by re-quantization, because the decoded image to be re-encoded contains the quantization error added to the original image.

A second problem of the prior art is large process load of the converter, possibly occurs in the process of conversion of the moving image data to produce an unique coding information already posted to the terminal in a call procedure, for the case where the moving image data coded using various coding tools are to be distributed in a call procedure through a network such as CS network or PS network.

This is because decoding and encoding are indispensable for every moving image data to be converted to produce a syntax of a unique coding information specified in the process of call procedure.

The present invention was conceived after considering the above-described situation, and is aimed at providing a moving image distribution system converting moving image data to be distributed to produce a syntax of unique coding information posted to a terminal in the process of call procedure while keeping high picture quality, for the purpose of distributing moving image data coded using various coding tools through a network to the terminal.

It is another object of the present invention to provide a moving image distribution system converting moving image data to be distributed to produce a syntax of unique coded information posted to a terminal in the process of call procedure in a high-speed manner, for the purpose of distributing moving image data coded using various coding tools through a network to the terminal.

According to the present invention, there is provided a moving image distribution system for distributing one or more streams through a network to a terminal which includes,
a converter configured to posting a predetermined capability information to the terminal side, and receiving at least one stream from a delivery server having streams stored therein, or receiving a plurality of streams from a plurality of delivery servers, and converting a syntax of the streams so as to adapt it to the capability information, and then sending them through the network to the terminal.

In the above described moving image distribution system, wherein the predetermined capability information may be specified by the delivery server having streams stored therein. In the above described moving image distribution system, wherein the predetermined capability information may be specified by the terminal.

In the above described moving image distribution system, wherein the streams received from the delivery server may include at least one of stream which are received by detecting a DTMF signal transmitted from the terminal, to select at least one of the streams from among streams received from the delivery server according to the DTMF signal, or a plurality of the streams which are received from a plurality of delivery servers.

In the above described moving image distribution system, wherein the moving image transcoder may include: a conversion control unit that judges necessity of conversion of the streams based on the capability information; a switch that changes over necessity of conversion of the stream based on information received from the conversion control unit; a variable length decoder that executes variable-length decoding of the streams; a parameter sequence conversion unit that re-sequences parameters; and a variable length coder that executes variable-length coding process.

In the above described moving image distribution system, wherein the moving image transcoder may include: a conversion control unit that judges necessity of conversion of the streams based on the capability information; a switch that changes over necessity of conversion of the streams based on information received from the conversion control unit; a parameter value conversion unit that rewrites parameters; a bit-position-shifting and byte-aligning unit that executes bit-position-shifting process for input coded bit stream and byte-aligning process; and a header judging unit that extracts header of the streams.

In the above described moving image distribution system, wherein the moving image transcoder may include: a conversion control unit that judges necessity of conversion of the streams based on the capability information; a switch that changes over necessity of conversion of the streams based on information received from the conversion control unit; a parameter value conversion unit that rewrites parameters; a variable length decoder that executes variable-length decoding of the streams; a parameter sequence conversion unit that re-sequences the parameters; a variable length coder that executes variable-length coding process; a bit-position-shifting and byte-aligning unit that executes bit-position-shifting process for input coding bit stream and byte-aligning process; and a header judging unit that extracts header of the streams.

In the above described moving image distribution system, wherein the converter may convert a syntax of the streams using a moving image transcoder, the moving image transcoder having at least one of: a conversion control unit that judges necessity of conversion of the streams based on the capability information; a switch that changes over necessity of conversion of the streams based on information received from the conversion control unit; a parameter value conversion unit that rewrites parameters; a variable length decoder that executes variable-length decoding of the streams; a parameter sequence conversion unit that re-sequences the parameters; a variable length coder that executes variable-length coding process; a bit-position-shifting and byte-aligning unit that executes bit-position-shifting process for input coding bit stream and byte-aligning process; and a header judging unit that extracts header of the streams.

The above-described moving image distribution system may be configured as distributing, when the terminal selects at least one stream using the DTMF signal, a stream describing at least one information selected from image, sound and text prompting stream selection using the DTMF signal, or at least one information selected from image, sound and text allowing changing to a selection screen of the next stream.

The above-described moving image distribution system may be configured as distributing, when the terminal distributes at least one selected stream, a stream describing at least one information selected from image, sound and text expressing commercial or advertisement before or after the stream.

It is to be noted that any arbitrary combination of the above-described constitutional elements, and any objects obtained by converting the expression of the present invention among method, apparatus, system, recording medium, computer program and so forth are effective as embodiments of the present invention.

A first effect is that the present invention can provide a moving image distribution system converting a syntax of moving image data to be distributed to a syntax of a unique coding option while keeping high picture quality, for the purpose of distributing moving image data coded using various coding options through a network to a terminal.

A second effect is that the present invention can provide a moving image distribution system converting a syntax of moving image data to be distributed to a syntax of a unique coding option in a high-speed manner, for the purpose of distributing moving image data coded using various coding options through a network to a terminal.

### BRIEF DESCRIPTION OF THE DRAWINGS

The above and other objects, advantages and features of the present invention will be more apparent from the following description taken in conjunction with the accompanying drawings, in which:

FIG. 1 is a block diagram showing a configuration of a system according to an exemplary embodiment of the present invention;
FIG. 2 is a drawing showing a configuration of a video packet in I-VOP wherein only Resync marker was used as a coding tool according to MPEG-4 Visual;
FIG. 3 is a drawing showing a configuration of a video packet in P-VOP wherein only Resync marker was used as a coding tool according to MPEG-4 Visual;
FIG. 4 is a drawing showing a configuration of a video packet in I-VOP wherein DataPartitioning, in addition to the Resync marker, was used as a coding tool according to MPEG-4 Visual;
FIG. 5 is a drawing showing a configuration of a video packet in P-VOP wherein DataPartitioning, in addition to the Resync marker, was used as a coding tool according to MPEG-4 Visual;
FIG. 6 is a block diagram showing a configuration of the syntax conversion transcoder according to an exemplary embodiment of the present invention;
FIG. 7 is a flow chart showing operations of the syntax conversion transcoder according to an exemplary embodiment of the present invention;
FIG. 8 is a block diagram showing a configuration of the syntax conversion transcoder according to another exemplary embodiment of the present invention;
FIG. 9 is a flow chart showing operations of the syntax conversion transcoder according to another exemplary embodiment of the present invention;
FIG. 10 is a block diagram showing a configuration of the syntax conversion transcoder according to another exemplary embodiment of the present invention;
FIG. 11 is a flow chart showing operations of the syntax conversion transcoder according to another exemplary embodiment of the present invention;
FIGS. 12 to 18 are block diagrams showing configurations of systems according to the embodiments of the present invention;
FIGS. 19 to 21 are block diagrams showing configurations of syntax conversion transcoders according to the embodiments of the present invention;
FIG. 22 is a block diagram showing a configuration of a system according to an exemplary embodiment of the present invention;
FIG. 23 is a drawing showing an example of a moving image data selection screen according to an exemplary embodiment of the present invention; and
FIG. 24 is a block diagram showing a configuration of a system according to an exemplary embodiment of the present invention.

### BEST MODE FOR CARRYING OUT THE INVENTION

Paragraphs below will describe embodiments of the present invention, referring to the attached drawings. It is to be noted that any similar constitutional elements will be given with similar reference numerals, so as to appropriately avoid repetitive explanation.

### (First Exemplary Embodiment)

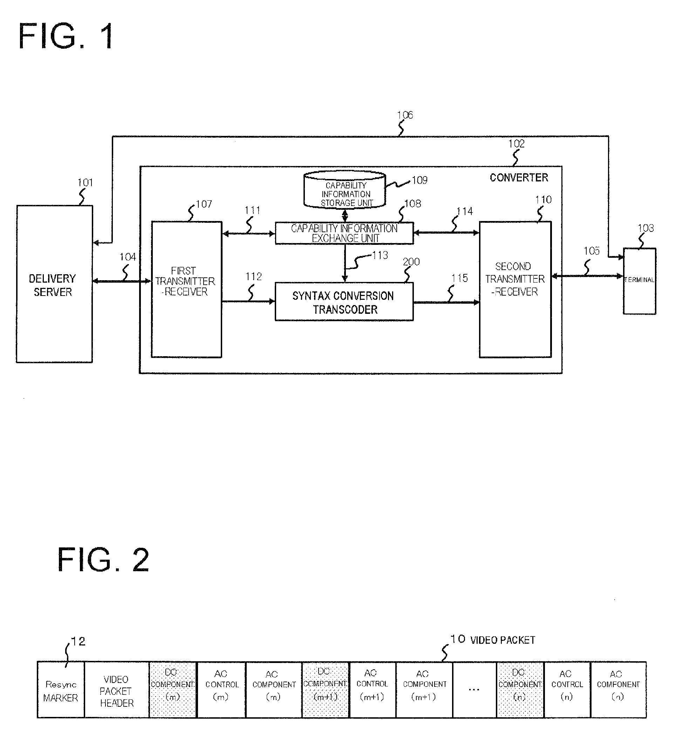

FIG. 1 is a block diagram showing a configuration of a moving image distribution system according to an exemplary embodiment of the present invention. The moving image distribution system according to the exemplary embodiment of the present invention is a moving image distribution system for distributing one or more streams through networks (transmission path 104 and transmission path 105) to a terminal 103, and has a converter 102 configured to posting a predetermined capability information 114 to the terminal 103 side, and receiving at least one stream from a delivery server 101 having streams stored therein, or receiving a plurality of streams from a plurality of delivery servers 101, and converting a syntax of the streams so as to adapt it to the capability information 114, and then sending them through the network (the transmission path 105) to the terminal 103.

For further detail, the moving image distribution system comprises the delivery server 101, the converter 102, the terminal 103, the transmission path 104, the transmission path 105 and a transmission path 106.

Each constitutional element of the moving image distribution system is realized arbitrary combinations of hardware and software, mainly contributed by a CPU of an arbitrary computer, a memory, a program loaded into the memory so as to realize the constitutional elements shown in the drawing, a memory unit such as hard disk storing the program, and an interface for network connection. Those skilled in the art will understand that there are various modified examples of methods of realizing these constitutional elements and apparatuses. Each drawing described below will show a block on the functional basis, rather than a configuration on the hardware basis.

In this exemplary embodiment, the transmission path 104 is a PS network connecting the delivery server 101 and the converter 102. From the delivery server 101, capability information 111 and moving image data 112 are transmitted through the transmission path 104 to the converter 102. From the converter 102, a predetermined capability information 114a (indicated as "114" in the drawing, and indicated as "114a" or "114b" if discrimination is necessary) is transmitted through the transmission path 104 to the delivery server 101. The capability information 114a sent herein from the converter 102 to the delivery server 101 typically means information necessary for communication between the converter 102 and the delivery server 101.

When video bitstreams stored in the delivery server 101 are to be decoded and reproduced on the terminal 103, it is necessary to exchange capability information of the video bitstreams between the delivery server 101 and the terminal 103. The video bitstreams , however, differ in the syntax depending on setting of various coding options such as error resiliency system, so that for the case where a plurality of video bitstreams are to be received, decoding could be unsuccessful only with the capability information of the video bitstreams exchanged with the delivery server. For this reason, decoding of one or more video bitstreams stored in the delivery server 101 by the terminal 103 during a single call procedure requires a converter 102 capable of converting the video bitstreams into the capability information of the video bitstreams posted to the terminal 103 during the call procedure.

The transmission path 105 is a CS network connecting the converter 102 and the terminal 103. From the converter 102, capability information 114a and moving image data 115 are transmitted through the transmission path 105 to the terminal 103, and from the terminal 103, capability information 114b is transmitted through the transmission path 105 to the converter 102. Based on the capability information 114a posted to the terminal 103, the terminal 103 can decode received image data.

The transmission path 106 is a PS network connecting the delivery server 101 and the terminal 103. From the terminal 103, requests for selection and distribution of the moving image data are transmitted through the transmission path 106 to the delivery server 101, and from the delivery server 101, route information of the transmission path 105 allowing connection to the converter 102 is transmitted through the transmission path 106 to the terminal 103. The route information in this exemplary embodiment may typically be a phone number used for connection to the converter 102.

In FIG. 1, the delivery server 101 has video bitstreams (referred to as "moving image data", hereinafter) preliminarily stored therein. Among these moving image data, terminal 103 selects one or more moving image data, and issues a distribution request to the delivery server 101. The delivery server 101 receives the selection/distribution request from the terminal 103 through the transmission path 106. The delivery server 101 sends the capability information 111 of the moving image data 112 to the converter 102 through the transmission path 104, together with one or more moving image data 112 requested by the terminal 103. The capability information 111 of the moving image data 112 transmitted from the delivery server 101 to the converter 102 will now be referred to as decoding information 113a (indicated as "113" in the drawing). The decoding information 113a can be exemplified by decoder configuration information (DCI). The delivery server 101 posts the route information of the transmission path 105 connected to the converter 102, to the terminal 103 through the transmission path 106.

Then, the converter 102 receives the capability information 114b from the terminal 103 using, for example, ITU-T recommendation H.245 protocol, and posts the capability information 114a of unique moving image data preliminarily specified by the converter 102 to the terminal 103. The capability information 114a of the moving image data transmitted by the converter 102 to the terminal 103 will now be referred to as coding information 113b (indicated as "113" in the drawing). The coding information is typically DCI.

The terminal 103 issues a connection request to the delivery server 101, connects itself to the delivery server 101 through the transmission path 106, selects moving image data stored in the delivery server 101, and issues a distribution request. When the terminal 103 selects the moving image data and issues the distribution request, the route information of the transmission path 105 allowing connection to the converter 102 is posted from the delivery server 101 through the transmission path 106 to the terminal 103. The terminal 103 exchanges the capability information 114 with the converter 102 through thus-posted transmission path 105, and receives the capability information 114a of the moving image data (coding information 113b transmitted by the converter 102). Thereafter, the terminal 103 receives the moving image data 115 from the converter 102, and decodes them based on the capability information 114a.

As shown in FIG. 1, the converter 102 includes a first transmitter-receiver 107, a capability information exchange unit 108, a capability information storage unit 109, a syntax conversion transcoder 200, and a second transmitter-receiver 110.

The converter 102 receives the decoding information 113a of the moving image data received from the delivery server 101 according to a predetermined protocol. The moving image data 112 distributed by the delivery server 101 is converted to a syntax of the unique coding information 113b posted to the terminal 103. Thus-converted moving image data is then transmitted to the terminal 103.

The first transmitter-receiver 107 receives, from the delivery server 101, the decoding information 113a (indicated as "113" in the drawing) of the moving image data 112 transmitted typically according to IETF recommendation SDP protocol through the transmission path 104, and sends it to the capability information exchange unit 108. The first transmitter-receiver 107 receives the moving image data 112 from the delivery server 101, and then sends the moving image data 112 to the syntax conversion transcoder 200.

The capability information exchange unit 108 exchanges the capability information 111 with the delivery server 101 through the first transmitter-receiver 107, typically according to IETF recommendation SDP protocol. The capability information exchange unit 108 posts the decoding information 113a received from the delivery server 101 to the syntax conversion transcoder 200. The capability information exchange unit 108 also exchanges the capability information 114 with the terminal 103, typically according to ITU-T recommendation H.245 protocol. In the capability information exchange with the terminal 103, the unique coding information 113b (indicated as "113" in the drawing) preliminarily determined by the converter 102 is posted to the terminal 103. The unique coding information 113b posted to the terminal 103 is then posted to the syntax conversion transcoder 200.

The capability information storage unit 109 stores capability information of a predetermined unique moving image data. The capability information storage unit 109 in this exemplary embodiment is configured as being included in the converter 102 without limitation, and may be included anywhere so far as it can be referred to by the capability information exchange unit 108. The capability information stored in the capability information storage unit 109 may be configured as being externally settable. For example, the capability information storage unit 109 may be configured as a recording medium attachable to the converter 102 in a detachable manner. The capability information may also be stored typically in an USB memory, and may be read out from the USB memory depending on needs for the setting. The capability information may still also be set using a predetermined command from the external through a network or the like.

The syntax conversion transcoder 200 receives from the capability information exchange unit 108 the decoding information 113a of the moving image data to be distributed and the coding information 113b posted to the terminal 103. The moving image data 112 received from the first transmitter-receiver 107 is converted on the syntax level basis, based on the decoding information 113a and coding information 113b posted by the capability information exchange unit 108. The converted moving image data 115 is transmitted to the second transmitter-receiver 110. Details of the syntax conversion transcoder 200 will be described later.

The second transmitter-receiver 110 sends the capability information 114a received from the capability information exchange unit 108 to the terminal 103 through the transmission path 105, and sends the capability information 114b received from the terminal 103 through the transmission path 105 to the capability information exchange unit 108. The second transmitter-receiver 110 also sends the moving image data 115 received from the syntax conversion transcoder 200 to the terminal 103 through the transmission path 105.

The syntax conversion transcoder 200 will be detailed referring to FIG. 2 to FIG. 7. The embodiments described below will exemplify MPEG-4, merely as one example for explaining the present invention, and will never limit the invention. As is obvious from the principle of the syntax conversion transcoder, it is adaptable also to other moving image compression coding systems.

FIG. 2 shows a configuration of a video packet in I-VOP wherein only Resync marker 12 (synchronous marker) is used as a coding tool. The video packet 10 shown in FIG. 2 hypothetically contains the m-th to n-th macro-blocks (MB). DC component (m) means a bit string of information (coding mode, quantization difference value, and DC component) necessary for decoding a DC component of the m-th MB. AC control (m) means a bit string of information (coding pattern and AC prediction flag) necessary for decoding an AC component of the m-th MB. AC component (m) means a bit string of the AC component of the m-th MB.

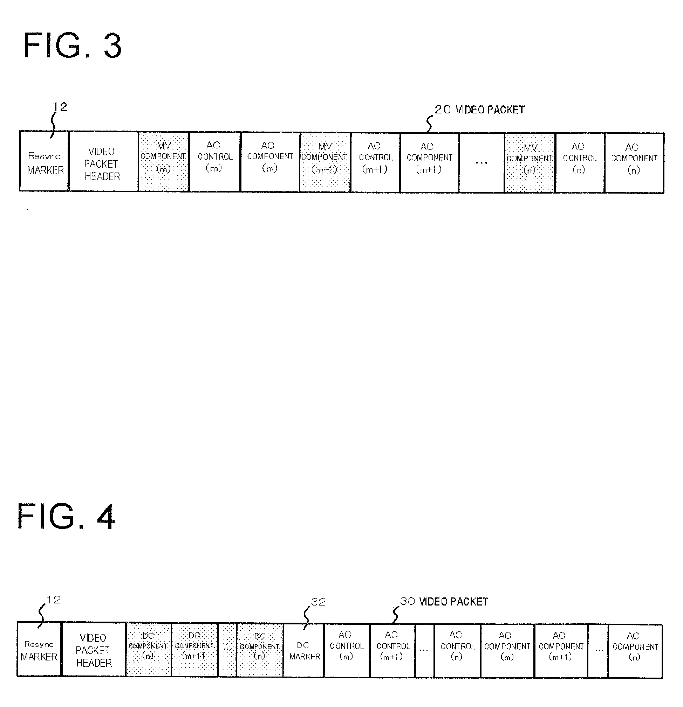

FIG. 3 shows a configuration of a video packet 20 in P-VOP for the case where only Resync marker 12 is used as a coding tool. MV component (m) means a bit string of information (coding MB flag, coding mode, and motion vector) necessary for decoding a motion vector. AC control (m) means a bit string of information (coding pattern, AC prediction flag, and quantization difference value) necessary for decoding an AC component. AC component (m) means a bit string of the AC component.

FIG. 4 shows a configuration of a video packet 30 in I-VOP wherein also Data Partitioning, in addition to the Resync marker 12, is used as a coding tool. Meanings of the DC component, the AC controls and the AC components are same as those shown in FIG. 2. Data (bit strings) with respect to the individual MBs are same as those shown in FIG. 2, wherein the bit strings in FIG. 2 are arranged on the MB basis, whereas the bit strings in FIG. 4 are arranged according to an order of significance of data. A DC marker 32 is inserted between the DC component and the AC control. In addition, for the case of using Reversible VLC (RVLC), the AC components are coded using an RVLC code table, rather than a usual VLC code table.

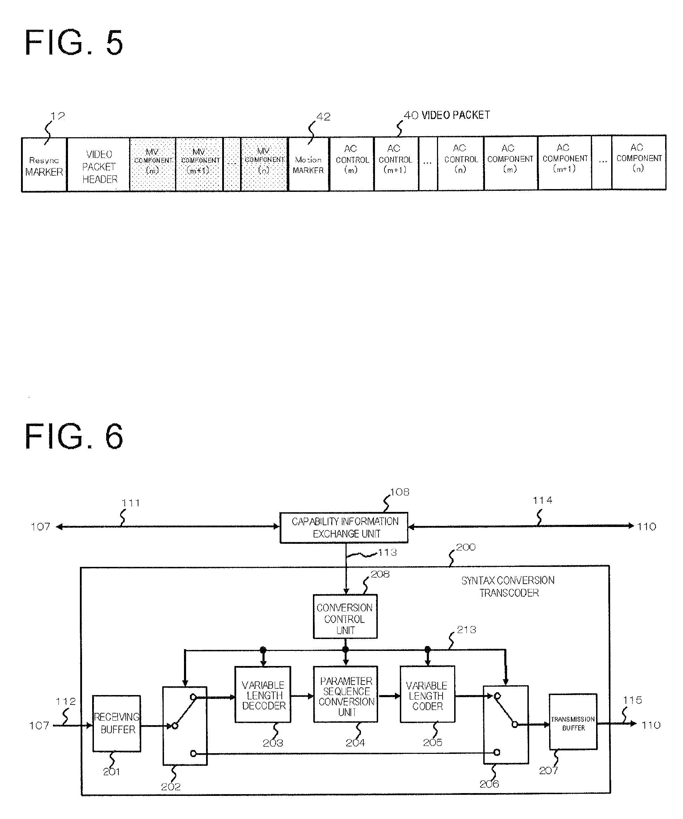

FIG. 5 shows a configuration of a video packet 40 in P-VOP wherein also Data Partitioning, in addition to the Resync marker 12, is used as a coding tool. Meanings of the MV component, the AC controls and the AC components are same as those shown in FIG. 3. Data (bit strings) with respect to the individual MBs are same as those shown in FIG. 3, wherein the bit strings in FIG. 3 are arranged on the MB basis, whereas the bit strings in FIG. 5 are arranged according to an order of significance of data. A Motion marker 42 is inserted between the MV component and the AC control. In addition, for the case of using RVLC, the AC components are coded using an RVLC code table, rather than a usual VLC code table.

FIG. 6 is a block diagram showing a detailed configuration of the syntax conversion transcoder 200 of this exemplary embodiment. The converter of this exemplary embodiment (converter 102 shown in FIG. 1) converts a syntax of a stream using a moving image transcoder (syntax conversion transcoder 200) which has a conversion control unit 208 that judges necessity of conversion of streams based on the capability information, switches (a switch 202 and a switch 206) that changes over necessity of conversion of the streams based on information received from the conversion control unit 208, a variable length decoder 203 that executes variable-length decoding of the streams, a parameter sequence conversion unit 204 that re-sequences the parameters, and a variable length coder 205 that executes variable-length coding process.

More specifically, the syntax conversion transcoder 200 includes a receiving buffer 201, the switch 202, the variable length decoder 203, the parameter sequence conversion unit 204, the variable length coder 205, the switch 206, and a transmission buffer 207.

The receiving buffer 201 temporarily stores the moving image data 112 received from the first transmitter-receiver 107. The receiving buffer 201 acquires a video packet such as those shown in any one of FIGS. 2 to 5, and outputs the acquired video packet to the switch 202.

The conversion control unit 208 judges whether the syntax in the video packet output from the receiving buffer 201 should be converted or not, referring to the coding information 113b and the decoding information 113a received from the capability information exchange unit 108. Based on the result of judgment, the conversion control unit 208 outputs a conversion control information 213 to the switch 202 and the switch 206, the variable length decoder 203, the parameter sequence conversion unit 204, and the variable length coder 205.

More specifically, if the syntax conversion is judged as being unnecessary, the conversion control unit 208 controls the switch 202 and the switch 206 so as to establish direct connection therebetween, and so as to skip syntax conversion of the video packet. By this control, the video packet sent out from the receiving buffer 201 is allowed to go through the switch 202, bypass the variable length decoder 203, the parameter sequence conversion unit 204 and the variable length coder 205, and is output through the switch 206 directly to the transmission buffer 207.

The conversion control unit 208 also directs to the variable length decoder 203 whether RVLC is adopted or not. The conversion control unit 208 also controls the parameter sequence conversion unit 204 to perform, if necessary, re-sequencing of a bit string resulted from variable-length decoding by the variable length decoder 203. The conversion control unit 208 still also directs to the variable length coder 205whether RVLC is adopted or not.

The switch 202 functions as switching whether a syntax in a video packet output from the receiving buffer 201 should be converted or not, based on the conversion control information 213 posted by the conversion control unit 208. When the syntax in the video packet output from the receiving buffer 201 is converted, the video packet output from the receiving buffer 201 is output to the variable length decoder 203. When the syntax in the video packet output from the receiving buffer 201 is not converted, the video packet output from the receiving buffer 201 is output to the switch 206.

The variable length decoder 203 handles the video packet output from the switch 202, so as to execute variable-length decoding process for parameters other than the AC components using a general VLC code table. The variable length decoder 203 also functions as controlling the variable-length decoding process, according to the conversion control information 213 posted by the conversion control unit 208. The AC components are processed by variable-length decoding by using a general VLC code table when RVLC is not adopted, and by using an RVLC code table when RVLC is adopted.

The parameter sequence conversion unit 204 re-sequences the bit strings, based on the result of variable-length decoding, carried out by the variable length decoder 203, of the video packet output from the switch 202. The parameter sequence conversion unit 204 also functions as controlling re-sequencing of the bit string, according to the conversion control information 213 posted by the conversion control unit 208. When the video packet output from the switch 202 has the pattern shown in FIG. 2, the bit strings are re-sequenced so as to achieve the pattern shown in FIG. 4, and the DC marker 32 is inserted. When the video packet output from the switch 202 has the pattern shown in FIG. 3, the bit strings are re-sequenced so as to achieve the pattern shown in FIG. 5, and the Motion marker 42 is inserted. When the video packet output from the switch 202 has the pattern shown in FIG. 4, the bit strings are re-sequenced so as to achieve the pattern shown in FIG. 2, and the DC marker 32 is deleted. When the video packet output from the switch 202 has the pattern shown in FIG. 5, the bit strings are re-sequenced so as to achieve the pattern shown in FIG. 3, and the Motion marker 42 is deleted.

The variable length coder 205 executes only the AC components to variable-length coding process. The variable length coder 205 also functions as controlling the variable-length coding process, according to the conversion control information 213 posted by the conversion control unit 208. It carries out the variable-length coding process by using a general VLC code table when RVLC is not adopted, and by using an RVLC code table when RVLC is adopted.

The switch 206 functions as switching whether a syntax in a video packet output from the receiving buffer 201 should be converted, according to the conversion control information 213 posted by the conversion control unit 208. When the syntax in the video packet output from the receiving buffer 201 is converted, the video packet output from the variable length coder 205 is output to the transmission buffer 207. When the syntax in the video packet output from the receiving buffer 201 is not converted, the video packet output from the switch 202 is output to the transmission buffer 207.

The transmission buffer 207 temporarily stores the video packet output from the switch 206, and sends it as the moving image data 115 to the second transmitter-receiver 110.

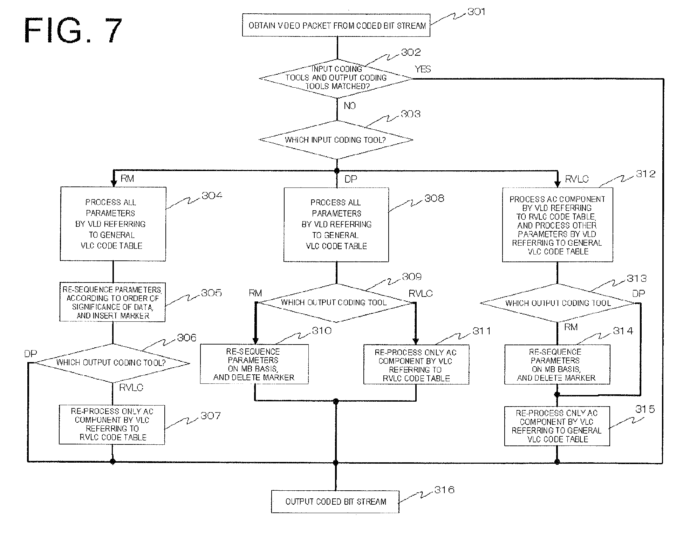

Operations of thus-configured moving image distribution system of this exemplary embodiment will be explained below. FIG. 7 is a flow chart showing exemplary operations of the syntax conversion transcoder 200 of this exemplary embodiment. The explanation will be given below referring to FIGS. 1 to 7.

First, the receiving buffer 201 of the syntax conversion transcoder 200 receives the moving image data 112 from the first transmitter-receiver 107, to thereby acquire the video packet as shown in any one of FIGS. 2 to 5 (step 301).

The conversion control unit 208 then judges coding tools used in the moving image data 112 (referred to as input coding tool, hereinafter) and coding tools used in the moving image data 115 (referred to as output coding tool), referring to the coding information 113b and the decoding information 113a received from the capability information exchange unit 108 (step 302). For example, the conversion control unit 208 judges difference between the input coding tools and the output coding tools in use or non-use of the Resync marker 12, use or non-use of Data Partitioning, and use or non-use of RVLC. If the input coding tools and the output coding tools completely match (YES in step 302), the conversion control unit 208 outputs the conversion control information 213 to the switch 202 and the switch 206, so as to allow them to output the video packet to the transmission buffer 207, while keeping the syntax in the video packet unconverted. More specifically, the process advances to step 316, and the transmission buffer 207 concatenates the video packets output from the switch 206, and sends them as moving image data to the second transmitter-receiver 110. If at least one of the input coding tools and the output coding tools does not match (No in step 302), the process advances to step 303.

In step 303, the conversion control unit 208 acquires the input coding tools, referring to the coding information 113b received from the capability information exchange unit 108, and then outputs information regarding thus-acquired input coding tools as the conversion control information 213. If the input coding tool is Resync marker 12 only (RM in step 303), the process advances to step 304. If the input coding tools are the Resync marker 12 and Data Partitioning (DP step 303), the process advances to step 308. If the input coding tools are the Resync marker 12, Data Partitioning and RVLC (RVLC in step 303), the process advances to step 312.

In step 304, the variable length decoder 203 carries out VLD process for all parameters in the video packet output from the switch 202, referring to the general VLC code table.

Next, the parameter sequence conversion unit 204 re-sequences the parameters in the video packet, from the sequence on the MB basis (FIG. 2 or FIG. 3) to the sequence on the basis of degree of significance of parameters (FIG. 4 or FIG. 5), based on the result of VLD process by the variable length decoder 203. In the re-sequencing from the sequence shown in FIG. 2 to that shown in FIG. 4, the DC marker 32 is inserted between the DC component and the AC control. In the re-sequencing from the sequence shown in FIG. 3 to that shown in FIG. 5, the Motion marker 42 is inserted between the MV component and the AC control (step 305).

Next, the conversion control unit 208 acquires the output coding tools, referring to the decoding information 113a received from the capability information exchange unit 108, and outputs information regarding thus-acquired output coding tools as the conversion control information 213. If the output coding tools are the Resync marker 12 and Data Partitioning (DP in step 306), the re-sequenced video packet is output to the transmission buffer 207, and process advances to step 316. On the other hand, if the output coding tools are the Resync marker 12, Data Partitioning and RVLC (RVLC in step 306), the process advances to step 307.

In step 307, the variable length coder 205 carries out re-VLC process solely for the AC components shown in FIG. 4 or FIG. 5, referring to the RVLC code table. The video packet processed by re-VLC is output to the switch 206.

Next, in step 308, the variable length decoder 203 carries out VLD process for all parameters in the video packet output from the switch 202, referring to the general VLC code table.

Next, the conversion control unit 208 acquires the output coding tools, referring to the decoding information 113a received from the capability information exchange unit 108, and outputs information regarding thus-acquired output coding tools as the conversion control information 213. If the output coding tool is Resync marker 12 only (RM in step 309), the process advances to step 310. If the output coding tools are the Resync marker 12, Data Partitioning and RVLC (RVLC in step 309), the process advances to step 311.

In step 310, the parameter sequence conversion unit 204 re-sequences the parameters in the video packet, from the sequence on the basis of degree of significance of parameters (FIG. 4 or FIG. 5) to the sequence on the MB basis (FIG. 2 or FIG. 3), based on the result of VLD process by the variable length decoder 203. In the re-sequencing of the sequence shown in FIG. 4 to that shown in FIG. 2, the DC marker 32 between the DC component and the AC control is deleted. In the re-sequencing of the sequence from FIG. 5 to that shown in FIG. 3, the Motion marker 42 between the MV component and the AC control is deleted.

In step 311, similarly to the operation in step 307, the variable length coder 205 carries out re-VLC process solely for the AC components shown in FIG. 4 or FIG. 5, referring to the RVLC code table. The video packet processed by re-VLC is output to the switch 206.

Next, in step 312, the variable length decoder 203 carries out VLD process for the AC components in the video packet output from the switch 202, referring to the RVLC code table. The variable length decoder 203 also carries out VLD process for the parameters other than the AC components, referring to the general VLC code table.

In step 313, the conversion control unit 208 acquires the output coding tools, referring to the decoding information 113a received from the capability information exchange unit 108, and outputs information regarding thus-acquired output coding tools as the conversion control information 213.

If the output coding tool is the Resync marker 12 only (RM in step 313), the process advances to step 314. If the output coding tools are the Resync marker 12 and Data Partitioning (DP in step 313), the process advances to step 315.

In step 314, similarly to the operation in step 310, the parameter sequence conversion unit 204 re-sequences the parameters in the video packet, from the sequence on the basis of degree of significance of parameters (FIG. 4 or FIG. 5) to the sequence on the MB basis (FIG. 2 or FIG. 3), based on the result of VLD process by the variable length decoder 203.

In the re-sequencing from the sequence shown in FIG. 4 to that shown in FIG. 2, the DC marker 32 between the DC component and AC control is deleted. In the resequencing from the sequence shown in FIG. 5 to that shown in FIG. 3, the Motion marker 42 between the MV component and AC control is deleted.

In step 315, the variable length coder 205 carries out re-VLC process solely for the AC components shown in FIG. 2 or FIG. 3, referring to the general VLC code table. The video packet processed by re-VLC is output to the switch 206.

In step 316, the transmission buffer 207 concatenates the video packets output from the switch 206, and outputs them as the moving image data to the second transmitter-receiver 110.

In this way, the streams are processed by syntax conversion so as to adapt them to the predetermined coding information 113b, and are distributed to the terminal 103. On the terminal 103, the moving image data can be decoded based on the posted coding information 113b.

### (Second Exemplary Embodiment)

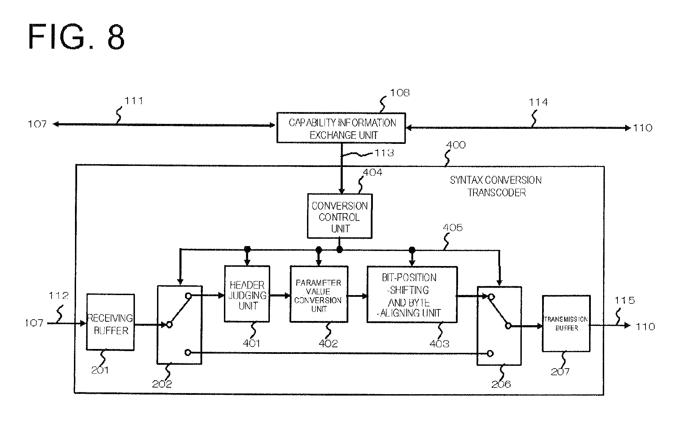

FIG. 8 is a block diagram showing a configuration of the essential portion of the moving image distribution system according to an exemplary embodiment of the present invention. In the moving image distribution system of this exemplary embodiment, the converter (converter 102 in FIG. 1) converts a syntax of a stream using a moving image transcoder (syntax conversion transcoder 400) which has a conversion control unit 404 that judges necessity of conversion of the streams based on the capability information, switches (the switch 202 and the switch 206) that changes over necessity of conversion of the streams based on information received from the switching conversion control unit 404, a parameter value conversion unit 402 that rewrites parameters, a bit-position-shifting and byte-aligning unit 403 that executes bit-position-shifting process for input coding bit stream and byte-aligning process, and a header judging unit 401 that extracts header of the streams.

More specifically, the syntax conversion transcoder 400 of this exemplary embodiment has the receiving buffer 201, the switch 202, the switch 206 and the transmission buffer 207, all of which being same as those shown in FIG. 6 in relation to the foregoing exemplary embodiment, and additionally has the header judging unit 401, the parameter value conversion unit 402, the bit-position-shifting and byte-aligning unit 403, and the conversion control unit 404.

The header judging unit 401 judges whether the video packet output from the switch 202 is a head video packet of VOP nor not, or whether an HEC (header extension code) is contained in the video packet header or not.

The parameter value conversion unit 402 converts vop_time_increment expressed by vop_time_increment resolution into that expressed by output time resolution.

The bit-position-shifting and byte-aligning unit 403 carries out bit-position-shifting process for parameters having values beyond a value converted by the parameter value conversion unit 402, and the last byte-aligning process for the video packet.

The conversion control unit 404 judges whether a syntax of a video packet output from the receiving buffer 201 should be converted or not, referring to the coding information 113b and the decoding information 113a received from the capability information exchange unit 108. Based on the result of judgment, the conversion control unit 404 outputs a conversion control information 405 to the switch 202 and the switch 206, the header judging unit 401, the parameter value conversion unit 402, the bit-position-shifting and the byte-aligning unit 403.

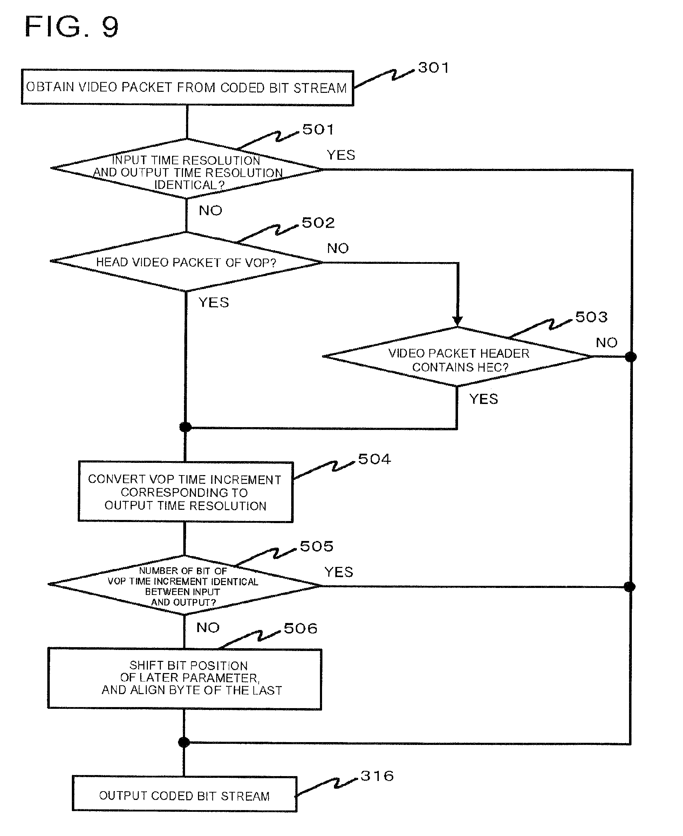

Operations of thus-configured moving image distribution system of this exemplary embodiment will be explained below. FIG. 9 is a flow chart showing exemplary operations of the moving image distribution system of this exemplary embodiment. Explanation will be made below, referring to FIG. 1, FIG. 8, and FIG. 9. It is to be noted that any steps, similar to those in the flow chart of the moving image distribution system of the foregoing exemplary embodiment shown in FIG. 7, will be given with the similar step numbers, so as to appropriately avoid repetitive detailed explanation.

In step 501, the conversion control unit 404 judges difference in vop_time_increment resolution adopted by the coded bit stream 112 and the coded bit stream 115, referring to the coding information 113b and the decoding information 113a received from the capability information exchange unit 108. If the input time resolution is identical to the output time resolution (YES in step 501), the conversion control unit 404 outputs the conversion control information 405 to the switch 202 and the switch 206, so as to allow them to output the video packet to the transmission buffer 207, while keeping the syntax in the video packet unconverted. The process then advances to step 316.

On the other hand, if the input time resolution differs from the output time resolution (NO in step 501), the process advances to step 502. In step 502, the header judging unit 401 judges whether the video packet output from the switch 202 is the head video packet of VOP or not.

If the video packet is not the head video packet of VOP (NO in step 502), the header judging unit 401 judges whether the header of the video packet output from the switch 202 contains HEC or not (step 503).

If the video packet is the head video packet VOP (YES in step 502) or if the header of the video packet contains HEC (YES in step 503), the parameter value conversion unit 402 converts the vop_time_increment expressed by input time resolution into value expressed by output time resolution (step 504).

If the header of the video packet does not contain HEC (NO in step 503), the parameter value conversion unit 402 outputs the video packet output from the header judging unit 401 directly to the switch 206. The process then advances to step 316.

As continued from step 504, the bit-position-shifting and byte-aligning unit 403 judges whether the number of bit of the vop_time_increment is altered or not in the process of step 504 (step 505). If the number of bit of vop_time_increment is altered by the process in step 504 (NO in step 505), the process advances to step 506. If the number of bit of vop_time_increment is not altered by the process in step 504 (YES in step 505), the bit-position-shifting and byte-aligning unit 403 outputs the video packet output from the parameter value conversion unit 402 directly to the switch 206. The process then advances to step 316.

In step 506, the bit-position-shifting and byte-aligning unit 403 shifts bit positions of the parameters having values beyond vop_time_increment. In addition, the bit-position-shifting and byte-aligning unit 403 also carries out byte aligning process for the last video packet, and outputs the video packet thus processed by the position shifting and byte aligning to the switch 206.

As has been described in the above, the moving image distribution system of this exemplary embodiment distributes moving image data, coded using various coding options, to the terminal 103 through the network, so that the moving image data to be distributed can be converted to a syntax of a unique coding option, while keeping high picture quality.

### (Third Exemplary Embodiment)

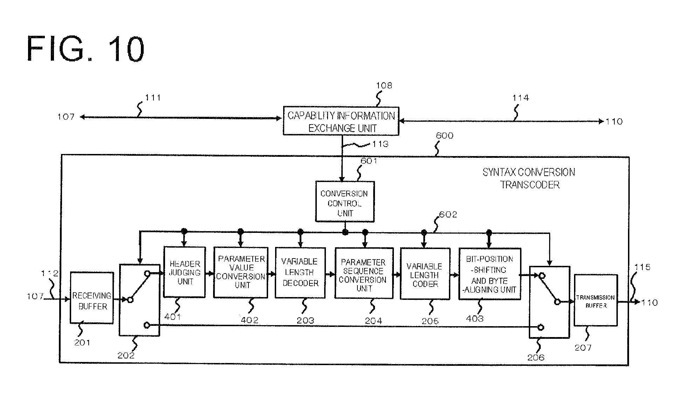

FIG. 10 is a block diagram showing a configuration of the essential portion of the moving image distribution system according to an exemplary embodiment of the present invention. In the moving image distribution system of this exemplary embodiment, the converter (converter 102 in FIG. 1) converts a syntax of streams using a moving image transcoder (syntax conversion transcoder 600) which has a conversion control unit 601 that judges necessity of conversion of streams based on the capability information, the switches (the switch 202 and the switch 206) that changes over necessity of conversion based on information received from the conversion control unit 601, the parameter value conversion unit 402 that rewrites parameters, a variable length decoder 203 that executes variable-length decoding of the streams, the parameter sequence conversion unit 204 that re-sequences the parameters, the variable length coder 205 that executes variable-length coding process, the bit-position-shifting and byte-aligning unit 403 that executes bit-position-shifting process for input coding bit stream and byte-aligning process, and a header judging unit 401 that extracts header of the streams.

More specifically, the syntax conversion transcoder 600 of this exemplary embodiment has the receiving buffer 201, the switch 202, the header judging unit 401, the parameter value conversion unit 402, the variable length decoder 203, the parameter sequence conversion unit 204, the variable length coder 205, the bit-position-shifting and byte-aligning unit 403, the switch 206 and the transmission buffer 207, all of which being same as those of the syntax conversion transcoder 200 and the syntax conversion transcoder 400 shown in FIG. 6 and FIG. 8 in relation to the foregoing embodiments, and additionally has the conversion control unit 601.

The conversion control unit 601 judges whether conversion is necessary or not, referring to the coding information 113b and decoding information 113a received from the capability information exchange unit 108. Based on the result of judgment, the conversion control unit 601 outputs conversion control information 602 to the switch 202 and conversion on/off change-over switch 206, the header judging unit 401, the parameter value conversion unit 402, the variable length decoder 203, the parameter sequence conversion unit 204, the variable length coder 205 and the bit-position-shifting and byte-aligning unit 403.

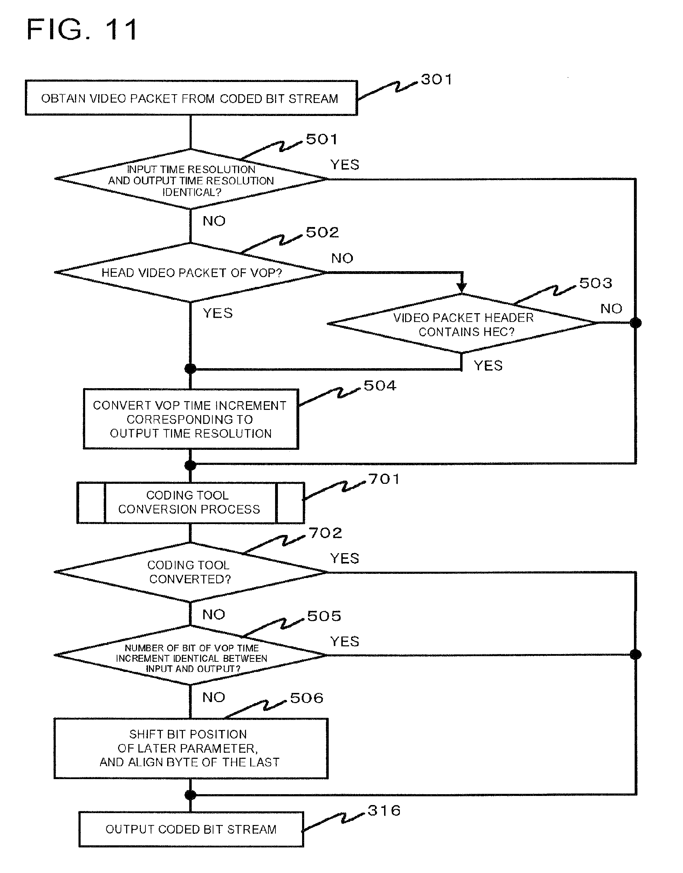

Operations of thus-configured moving image distribution system of this exemplary embodiment will be explained below. FIG. 11 is a flow chart showing exemplary operations of the moving image distribution system of this exemplary embodiment. Explanation will be made referring to FIG. 1, FIG. 10, and FIG. 11. It is to be noted that any steps similar to those in the flow chart of the moving image distribution system previously shown in FIG. 9 will be given with the same number of steps, so as to appropriately avoid repetitive detailed explanation.

In step 701 in FIG. 11, the coding tool conversion process (step 303 to step 315) explained referring to FIG. 7 in the above is carried out.

In step 702, the bit-position-shifting and byte-aligning unit 403 judges whether the video packet output from the variable length coder 205 has already gone through coding tool conversion or not. If the video packet output from the variable length coder 205 has already gone through coding tool conversion (YES in step 702), the video packet output from the variable length coder 205 is output to the switch 206 without modification. The process then advances to step 316. If the video packet output from the variable length coder 205 has not gone through coding tool conversion (NO in step 702), the process advances to step 505.

Also in the moving image distribution system of this exemplary embodiment, the stream can be converted in the syntax thereof so as to adapt it to the predetermined capability information, similarly to as described in the above, and similar effects can be obtained.

### (Fourth Exemplary Embodiment)

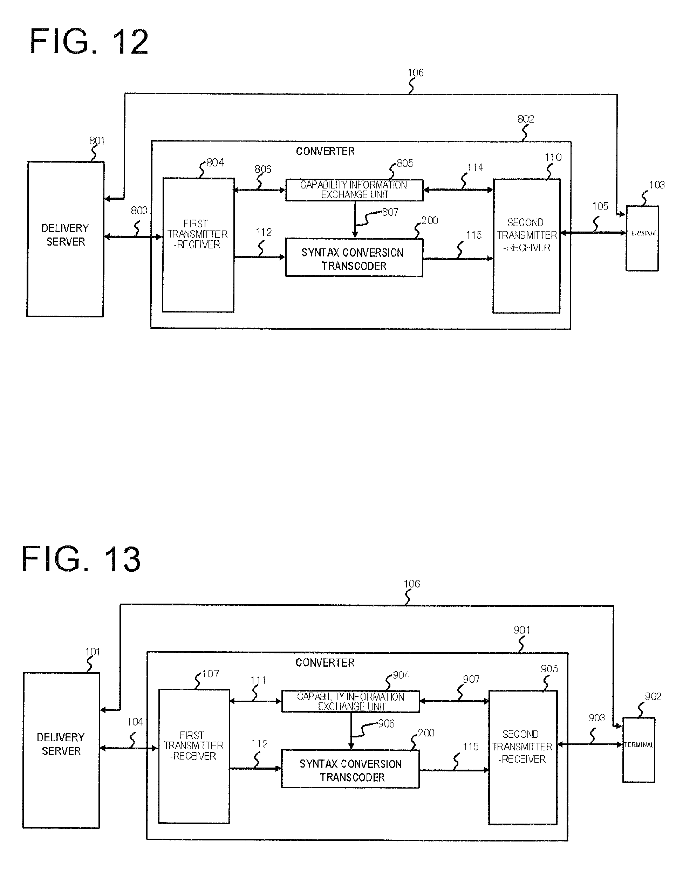

FIG. 12 is a block diagram showing a configuration of the moving image distribution system according to an exemplary embodiment of the present invention. The moving image distribution system is a moving image distribution system for distributing one or more streams through networks (transmission path 803 and transmission path 105) to the terminal 103, and has a converter 802 configured to posting a capability information 806 specified by the delivery server 801 having streams stored therein to the terminal 103 side, and receiving at least one stream from the delivery server 801, or receiving a plurality of streams from a plurality of delivery servers 801, and converting a syntax of at least one stream so as to adapt it to the capability information 806, and the sending them through the network (transmission path 105) to the terminal 103.

More specifically, the moving image distribution system of this exemplary embodiment is composed of the delivery server 801, the converter 802, the terminal 103, the transmission path 803, the transmission path 105, and the transmission path 106.

The delivery server 801 sends the capability information 806, which contains coding information 807a (indicated as "807" in the drawing) to be posted to the terminal 103, to the converter 802 through the transmission path 803.

In this exemplary embodiment, the transmission path 803 connects the delivery server 801 and the converter 802 with a PS network. The capability information 806, the coding information 807a and moving image data 112 are transmitted from the delivery server 801 through the transmission path 803 to the converter 802, and the coding information 807a is transmitted from the converter 802 to the terminal 103 through the transmission path 105.

The converter 802 includes a first transmitter-receiver 804, a capability information exchange unit 805, the syntax conversion transcoder 200, and the second transmitter-receiver 110.
The first transmitter-receiver 804 receives the capability information 806 transmitted from the delivery server 801 typically according to the IETF recommendation SDP protocol, and sends the capability information 806 to the capability information exchange unit 805. The first transmitter-receiver 804 also receives the moving image data 112 from the delivery server 801, and sends the moving image data 112 to the syntax conversion transcoder 200.

The capability information exchange unit 805 posts the coding information, contained in the capability information 806 received from the delivery server 801 through the first transmitter-receiver 804, to the terminal 103. The coding information 807a is posted to the syntax conversion transcoder 200. Although not detailed in this exemplary embodiment, also the decoding information 807b (indicated as "807" in the drawing) contained in the capability information 806 exchanged with the delivery server 801 is posted from the capability information exchange unit 805 to the syntax conversion transcoder 200.

Also in thus-configured moving image distribution system of this exemplary embodiment, at least one stream can be converted in the syntax thereof so as to adapt it to the capability information 806 specified by the delivery server 801, similarly to as described in the above.

### (Fifth Exemplary Embodiment)

FIG. 13 is a block diagram showing a configuration of the moving image distribution system according to an exemplary embodiment of the present invention. The moving image distribution system of this exemplary embodiment is a moving image distribution system for distributing one or more stream through networks (transmission path 104 and transmission path 903) to a terminal 902, and has a converter 901 configured to posting a capability information 907 specified by a terminal 902 to a terminal 902, and receiving at least one stream from the delivery server 101 having streams stored therein, or receiving a plurality of streams from a plurality of delivery servers 101, and converting a syntax of the streams so as to adapt it to the capability information 907, and then sending them through the network (transmission path 903) to the terminal 902.

More specifically, the moving image distribution system of this exemplary embodiment is composed of the delivery server 101, the converter 901, the terminal 902, the transmission path 104, the transmission path 903, and the transmission path 106.

The terminal 902 specifies coding information of the moving image data to be distributed, and posts it to the converter 901, or posts an additional information so as to disuse a part of coding options.

The transmission path 903 connects the converter 901 and the terminal 902 with a CS network. The capability information is transmitted from the converter 901 and the terminal 902 through the transmission path 903, and the coding information sent by the terminal 902 to the converter 901 is transmitted through the transmission path 903. Also the moving image data is transmitted from the converter 901 through the transmission path 903.

The converter 901 includes the first transmitter-receiver 107, a capability information exchange unit 904, a second transmitter-receiver 905, and the syntax conversion transcoder 200.
The capability information exchange unit 904 posts the coding information (capability information 907) to the terminal 902, based on the coding information or additional information received from the second transmitter-receiver 905. The capability information exchange unit 904 also posts the coding information 906a (indicated as "906", in the drawing) to the syntax conversion transcoder 200. Although not detailed in this exemplary embodiment, also the decoding information 906b (indicated as "906" in the drawing) contained in the capability information 111 exchanged with the delivery server 101 is posted from the capability information exchange unit 904 to the syntax conversion transcoder 200.

The second transmitter-receiver 905 sends the coding information or additional information (capability information 907) of the moving image data to be distributed, received from the terminal 902, to the capability information exchange unit 904. The second transmitter-receiver 905 then sends the coding information determined by the capability information exchange unit 904 to the terminal 902. The second transmitter-receiver 905 also sends the moving image data received from the syntax conversion transcoder 200 to the terminal 902, similarly to as described in the above.

Also in thus-configured moving image distribution system of this exemplary embodiment, at least one stream can be converted in the syntax thereof so as to adopt it to the capability information 907 specified by the terminal 902.

### (Sixth Exemplary Embodiment)

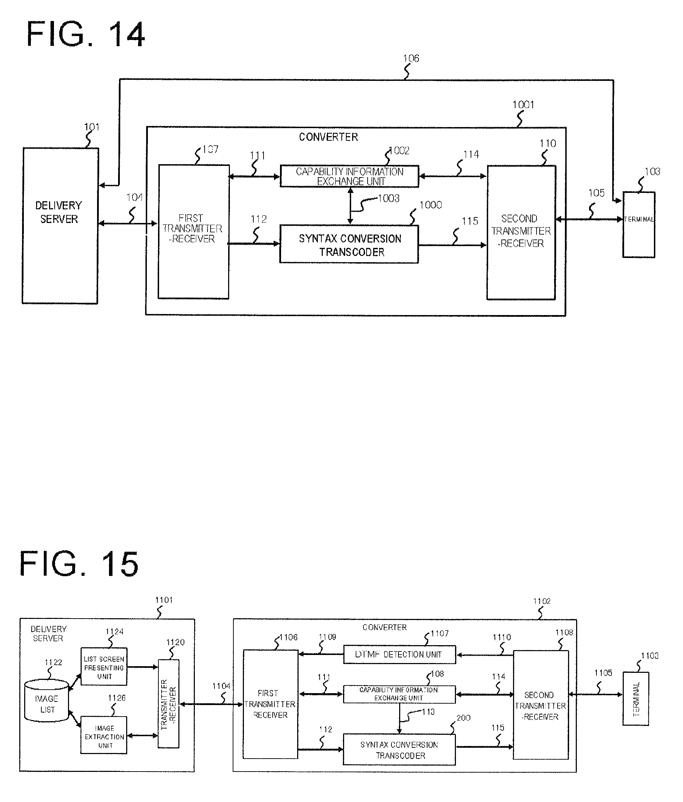

FIG. 14 is a block diagram showing a configuration of the moving image distribution system according to an exemplary embodiment of the present invention. The moving image distribution system of this exemplary embodiment differs from the moving image distribution system of the foregoing exemplary embodiment shown in FIG. 1, in that the syntax conversion transcoder takes part in syntax conversion of the stream so as to adapt it to the predetermined coding information 1003a (indicated as "1003" in the drawing).

The moving image distribution system of this exemplary embodiment is configured by replacing the converter 102 in the forgoing exemplary embodiment shown in FIG. 1 with a converter 1001. The converter 1001 has the first transmitter-receiver 107 and the second transmitter-receiver 110, which are same as those in the foregoing exemplary embodiment shown in FIG. 1, and additionally has a syntax conversion transcoder 1000 and a capability information exchange unit 1002.

The capability information exchange unit 1002 incorporates the coding information 1003a posted by the syntax conversion transcoder 1000 into the capability information 114, and posts the capability information 114 to the terminal 103 through the second transmitter-receiver 110.

The syntax conversion transcoder 1000 posts the predetermined coding information 1003a to the capability information exchange unit 1002, converts the moving image data 112 received from the delivery server 101 to the syntax of the predetermined coding information 1003a, and sends the converted moving image data 115 to the second transmitter-receiver 110.

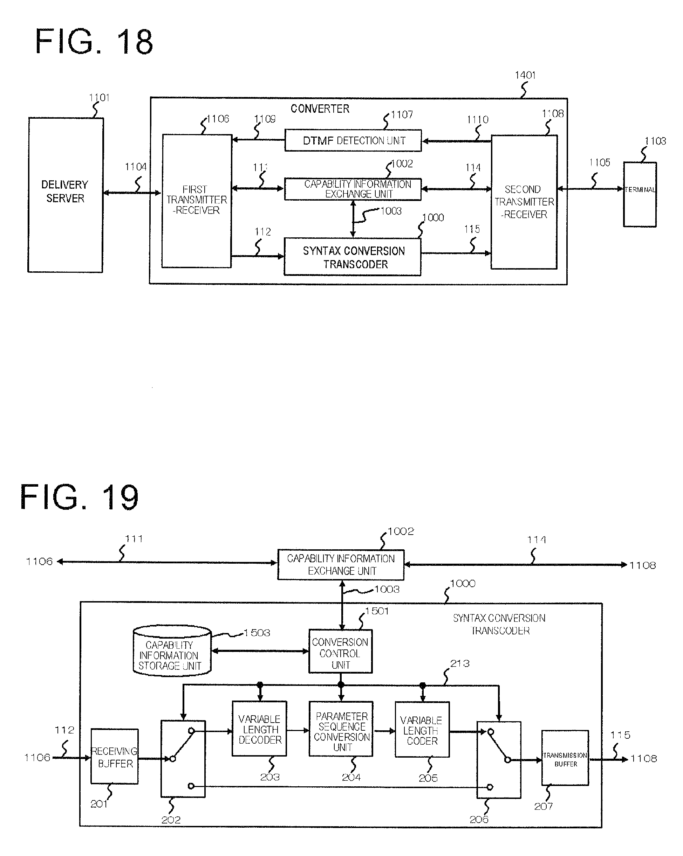

FIG. 19 is a block diagram showing a detailed configuration of the syntax conversion transcoder 1000 of the moving image distribution system of this exemplary embodiment. The syntax conversion transcoder 1000 of this exemplary embodiment has the receiving buffer 201, the switch 202, the variable length decoder 203, the parameter sequence conversion unit 204, the variable length coder 205, the switch 206, and the transmission buffer 207, all of which being same as those in the foregoing exemplary embodiment shown in FIG. 6, and additionally has a conversion control unit 1501 and a capability information storage unit 1503.

The conversion control unit 1501 posts the predetermined coding information 1003a to the capability information exchange unit 1002. The predetermined coding information 1003a is stored in the capability information storage unit 1503. The capability information storage unit 1503 of this exemplary embodiment is owned by the syntax conversion transcoder 1000, but the configuration is not limited thereto, and may be included anywhere so far as it can be referred to by the conversion control unit 1501. The capability information stored in the capability information storage unit 1503 may be configured as being settable from the external. For example, the capability information storage unit 1503 may be configured as a recording medium or the like, attachable or detachable to or from the converter. The capability information may also be stored in an USB memory or the like, and may be read out from the USB memory depending on needs for the setting. The capability information is still also allowable to effect the setting using a predetermined command from the external through a network or the like.

The capability information exchange unit 1002 receives the decoding information 1003b contained in the capability information 111a from the delivery server 101 through the first transmitter-receiver 1106, and judges whether the syntax in the video packet output form the receiving buffer 201 should be converted or not, based on the decoding information 1003b and on the coding information 1003a posted by the conversion control unit 1501 of the syntax conversion transcoder 1000. Based on the result of judgment, the conversion control unit 1501 outputs the conversion control information 213 to the switch 202 and the switch 206, the variable length decoder 203, the parameter sequence conversion unit 204 and the variable length coder 205. Method of control by the conversion control unit 1501 will not be explained here, because it is same as that in the foregoing exemplary embodiment shown in FIG. 7.

According to thus-configured moving image distribution system of this exemplary embodiment, effects similar to those in the foregoing embodiments will be obtained.

### (Seventh Exemplary Embodiment)

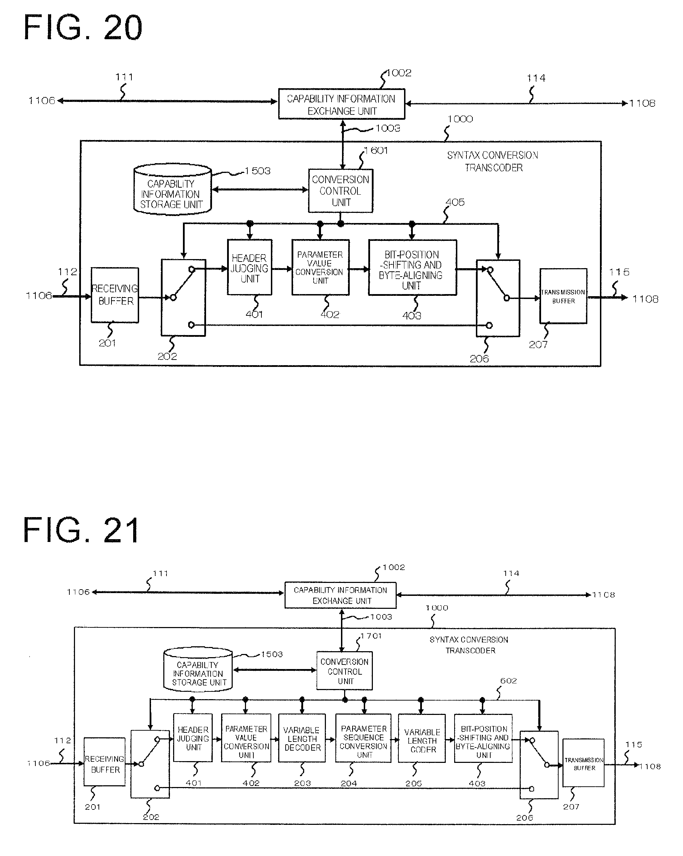

FIG. 20 is a block diagram showing a detailed configuration of the syntax conversion transcoder of the moving image distribution system of the present invention. The moving image distribution system of this exemplary embodiment differs from the moving image distribution system in the foregoing exemplary embodiment shown in FIG. 14, only in the configuration of the syntax conversion transcoder 1000.

As shown in FIG. 20, the syntax conversion transcoder 1000 of this exemplary embodiment has the receiving buffer 201, the switch 202, the header judging unit 401, the parameter value conversion unit 402, the bit-position-shifting and byte-aligning unit 403, the switch 206 and transmission buffer 207, all of which being same as those in the syntax conversion transcoder 400 of the foregoing exemplary embodiment shown in FIG. 8, has the capability information storage unit 1503 same as that shown in FIG. 19, and additionally has a conversion control unit 1601.

The conversion control unit 1601 posts the predetermined coding information 1003a to the capability information exchange unit 1002. The predetermined coding information 1003a is stored in the capability information storage unit 1503. The capability information exchange unit 1002 receives the decoding information 1003b contained in the capability information 111 from the delivery server 101 through the first transmitter-receiver 1106, and judges whether the syntax in the video packet output from the receiving buffer 201 should be converted or not, based on the decoding information 1003b and on the coding information 1003a posted by the conversion control unit 1601 of the syntax conversion transcoder 1000. Based on the result of judgment, the conversion control unit 1601 then outputs the conversion control information 405 to the switch 202 and the switch 206, the header judging unit 401, the parameter value conversion unit 402, the bit-position-shifting and the byte-aligning unit 403. The method of control by the conversion control unit 1601 is same as that in the foregoing exemplary embodiment shown in FIG. 9, so that the explanation will not be repeated.

### (Eighth Exemplary Embodiment)

FIG. 21 is a block diagram showing a detailed configuration of the syntax conversion transcoder 1000 in the moving image distribution system of the present invention. The moving image distribution system of this exemplary embodiment differs from the moving image distribution system in the foregoing exemplary embodiment shown in FIG. 14, only in the configuration of the syntax conversion transcoder 1000.

As shown in FIG. 21, the syntax conversion transcoder 1000 of this exemplary embodiment has the receiving buffer 201, the switch 202, the header judging unit 401, the parameter value conversion unit 402, the variable length decoder 203, the parameter sequence conversion unit 204, the variable length coder 205, the bit-position-shifting and byte-aligning unit 403, the switch 206 and the transmission buffer 207, all of which being same as those of the syntax conversion transcoder 600 in the foregoing exemplary embodiment shown in FIG. 10, has the capability information storage unit 1503 same as that shown in FIG. 19, and has a conversion control unit 1701.

The conversion control unit 1701 posts the predetermined coding information 1003a to the capability information exchange unit 1002. The predetermined coding information 1003a is stored in the capability information storage unit 1503. The capability information exchange unit 1002 receives the decoding information 1003b contained in the capability information 111, from the delivery server 101 through the first transmitter-receiver 1106, and based on the decoding information 1003b and on the coding information 1003a posted by the conversion control unit 1701 of the syntax conversion transcoder 1000, judges whether the syntax in the video packet output from the receiving buffer 201 should be converted or not. Based on the result of judgment, the conversion control unit 1701 outputs the conversion control information 602 to the switch 202 and the switch 206, the header judging unit 401, the parameter value conversion unit 402, the variable length decoder 203, the parameter sequence conversion unit 204, the variable length coder 205, and the bit-position-shifting and byte-aligning unit 403. The method of control by the conversion control unit 1701 is same as that in the foregoing exemplary embodiment shown in FIG. 11, so that the explanation will not be repeated.

According to thus-configured moving image distribution system of this exemplary embodiment, effects similar to those in the foregoing embodiments will be obtained.

### (Ninth Exemplary Embodiment)

FIG. 15 is a block diagram showing a configuration of the moving image distribution system according to an exemplary embodiment of the present invention. The moving image distribution system of this exemplary embodiment is a moving image distribution system for distributing one or more streams to a terminal 1103 through networks (transmission path 1104 and transmission path 1105), and has a converter 1102 configured to posting the predetermined capability information to the terminal 1103 side, detecting a DTMF signal 1110 sent from the terminal 1103, and receiving at least one stream after selecting among streams from the delivery server 1101 using the DTMF signal 1110, or receiving a plurality of streams from a plurality of delivery servers 1101, and converting a syntax of the streams so as to adapt it to the capability information, and then sending them through the network (transmission path 1105) to the terminal 1103.

More specifically, the moving image distribution system of this exemplary embodiment comprises the delivery server 1101, the converter 1102, the terminal 1103, the transmission path 1104, and the transmission path 1105.

The delivery server 1101 of this exemplary embodiment has a transmitter-receiver 1120, an image list storage unit (indicated as "image list" in the drawing) 1122, a listed image presentation unit 1124, and an image extraction unit 1126. The delivery server 1101 is also allowable to preliminarily prepare the moving image data of a guidance movie in the off-line state, and to distribute the moving image data of the guidance or stored moving image data according to a scenario. In this case, the listed image presentation unit 1124 and the image extraction unit 1126 are not necessary.

The transmitter-receiver 1120 communicates with the converter 1102 through the transmission path 1104. The image list storage unit 1122 stores a list of moving image data stored in the delivery server 1101. The listed image presentation unit 1124 reads the list out from the image list storage unit 1122, and prepares moving image data containing the list. The moving image data can be presented to the user of the terminal 1103, after being sent to the terminal 1103 through the converter 1102, and by displaying a list screen on the terminal 1103.

The image extraction unit 1126 discriminates the moving image data corresponded to the DTMF (dial tone multi frequency) signal sent from the terminal 1103 through the converter 1102, referring to a list of the image list storage unit 1122, and sends the corresponded moving image data 112 through the transmitter-receiver 1120 via the converter 1102 to the terminal 1103. In this process, the delivery server 1101 sends the decoding information (capability information 111) of a specified moving image data 112 and the moving image data 112 to the converter 1102.

The converter 1102 includes the first transmitter-receiver 1106, a DTMF detection unit 1107, a second transmitter-receiver 1108, the capability information exchange unit 108, and the syntax conversion transcoder 200.

The first transmitter-receiver 1106 sends the decoding information (capability information 111) of the moving image data 112 sent from the delivery server 1101 typically following the IETF recommendation SDP protocol, to the capability information exchange unit 108. The first transmitter-receiver 1106 then receives the moving image data 112 from the delivery server 1101, and sends it to the syntax conversion transcoder 200. First of all, the first transmitter-receiver 1106 receives the moving image data 112 containing a list screen from the delivery server 1101, and sends the moving image data 112 through the syntax conversion transcoder 200 and the second transmitter-receiver 1108 to the terminal 1103. On the terminal 1103, the user selects the moving image data referring to the list screen, and the terminal 1103 sends a moving image selection information to the converter 1102 using the DTMF signal. The first transmitter-receiver 1106 posts the DTMF signal detected by the DTMF detection unit 1107 to the delivery server 1101.

The DTMF detection unit 1107 detects the DTMF signal 1110 from the sound signal sent from the terminal 1103, and outputs the DTMF signal 1109 to the first transmitter-receiver 1106 in order to post the moving image selection information to the delivery server 1101.

The second transmitter-receiver 1108 sends the capability information 114 received from the terminal 1103 to the capability information exchange unit 108, and the coding information 113b received from the capability information exchange unit 108 to the terminal 1103. It also sends the moving image data 115 received from the syntax conversion transcoder 200 to the terminal 1103. The second transmitter-receiver 1108 receives the DTMF signal sent out from the terminal 1103, and transfers it to the DTMF detection unit 1107.

The terminal 1103 exchanges capability information 114 with the converter 1102, and receives the coding information 113b of the moving image data from the converter 1102. The terminal 1103 then sends the DTMF signal 1110 and selects a desired moving image data.

For example, the terminal 1103 may include a display unit (not shown) receiving the list screen sent out from the delivery server 1101 through the converter 1102, and allowing thereon display of the list screen, an operation unit (not shown) operable by the user, an acceptance unit (not shown) accepting the moving image data selected by the user by referring to the displayed list screen and by operating the operation unit, and a sender unit (not shown) sending the accepted moving image selection information as the DTMF signal.

The transmission path 1104 connects the delivery server 1101 and the converter 1102 with a PS network. The moving image selection and distribution requests are transmitted from the converter 1102 to the delivery server 1101 through the transmission path 1104. The capability information is transmitted from the delivery server 1101 to the converter 1102 through transmission path 1104, and the moving image data is transmitted from the delivery server 1101 through transmission path 1104.

The transmission path 1105 connects the converter 1102 and the terminal 1103 with a CS network. The DTMF signal 1110 is transmitted from the terminal 1103 to the converter 1102 through the transmission path 1105. The capability information is transmitted from the converter 1102 to the terminal 1103 through the transmission path 1105, and the moving image data is transmitted from the converter 1102 through the transmission path 1105.

In thus-configured moving image distribution system of this exemplary embodiment, the moving image selection and distribution requests from the terminal 1103 can be requested by using the DTMF signal 1110. The syntax conversion proceeded over the period that thus-selected moving image data is distributed from the delivery server 1101 to the terminal 1103 is same as that in the moving image distribution system of the foregoing exemplary embodiment shown in FIG. 1, so that the explanation will not be repeated. Also the moving image distribution system of this exemplary embodiment can exhibit similar effects.

### (Tenth Exemplary Embodiment)

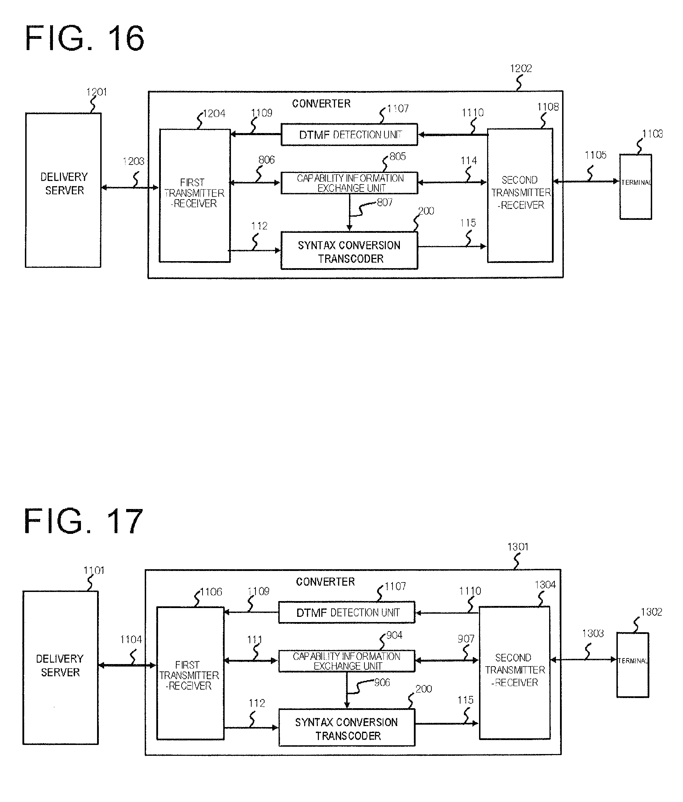

FIG. 16 is a block diagram showing a configuration of the moving image distribution system according to an exemplary embodiment of the present invention. The moving image distribution system of this exemplary embodiment is a moving image distribution system for distributing one or more streams through networks (transmission path 1203 and transmission path 1105) to the terminal 1103, and has a converter 1202 configured to posting the capability information specified by the delivery server 1201 having the streams stored therein to the terminal 1103 side, detecting the DTMF signal 1110 sent from the terminal 1103, and receiving at least one stream specified by the DTMF signal 1110, or receiving a plurality of streams from a plurality of delivery servers 1201, and converting a syntax of the at least one streams so as to adapt it to the capability information, and then sending the stream through the network (transmission path 1105) to the terminal 1103.

More specifically, the moving image distribution system of this exemplary embodiment comprises the delivery server 1201, the converter 1202, the terminal 1103, the transmission path 1203, and the transmission path 1105.

The delivery server 1201 sends, to the converter 1202, the coding information (capability information 806) to be posted to the terminal 1103. The delivery server 1201 also sends the moving image data 112 specified by the converter 1202 and the decoding information 807b of the moving image data 112 to the converter 1202.

The transmission path 1203 connects the delivery server 1201 and the converter 1202 with a PS network. The moving image selection and distribution requests are transmitted from the converter 1202 to the delivery server 1201 through the 1203. The capability information 806 is transmitted from the delivery server 1201 and the converter 1202 through the 1203, and the coding information 807a is transmitted by the delivery server 1201 to the converter 1202 through the 1203. The moving image data 112 is also transmitted from the delivery server 1201 to the converter 1202 through the 1203.

The first transmitter-receiver 1204 posts the distribution request of the moving image data received from the DTMF detection unit 1107 to the delivery server 1201. The first transmitter-receiver 1204 sends the decoding information and coding information of the moving image data, sent by the delivery server typically according to the IETF recommendation SDP protocol, to the capability information exchange unit 805. The first transmitter-receiver 1204 also receives the moving image data from the delivery server 1201, and sends it to the syntax conversion transcoder 200.

Operations by the DTMF detection unit 1107 for selecting the moving image data to be distributed, and operations by the syntax conversion transcoder 200 for syntax conversion of streams are same as those in the foregoing exemplary embodiments, so that the explanation will not be repeated.

### (Eleventh Exemplary Embodiment)

FIG. 17 is a block diagram showing a configuration of the moving image distribution system according to an exemplary embodiment of the present invention. In the moving image distribution system of this exemplary embodiment, the converter 1301 has the first transmitter-receiver 1106 and the DTMF detection unit 1107 which are same as those of the converter 1102 of the moving image distribution system of the foregoing exemplary embodiment shown in FIG. 15, the capability information exchange unit 904 and the syntax conversion transcoder 200 same as those of the converter 901 of the foregoing exemplary embodiment shown in FIG. 13, and additionally has a second transmitter-receiver 1304.

The terminal 1302 shown in FIG. 17 gives an instruction to the converter 1301 about the coding information of the moving image data to be distributed, or posts an additional information so as to disuse a part of the coding options. The terminal 1302 further sends the DTMF signal 1110 to the converter 1301, and selects a desired moving image data.

The transmission path 1303 connects the converter 1301 and the terminal 1302 with a CS network. The DTMF signal 1110 is transmitted from the terminal 1302 to the converter 1301 through the transmission path 1303. The capability information is transmitted from the converter 1301 and the terminal 1302 through the transmission path 1303, and the coding information or additional information of the moving image data to be distributed is transmitted from the terminal 1302 to the converter 1301 through the transmission path 1303. The moving image data 115 is transmitted from the converter 1301 to the terminal 1302 through the transmission path 1303.

The second transmitter-receiver 1304 sends, to the capability information exchange unit 904, the capability information 907 containing the coding information or additional information of the moving image data received from the terminal 1302. The second transmitter-receiver 1304 sends the coding information determined by the capability information exchange unit 904 to the terminal 1302. The second transmitter-receiver 1304t sends the DTMF signal 1110 received from the terminal 1302 to the DTMF detection unit 1107. The second transmitter-receiver 1304 also sends the moving image data 115 received from the syntax conversion transcoder 200 to the terminal 1302.

Operations by the DTMF detection unit 1107 for selecting the moving image data to be distributed, and operations by the syntax conversion transcoder 200 for syntax conversion of streams are same as those in the foregoing embodiments, so that the explanation will not be repeated.

The moving image distribution system of this exemplary embodiment can exhibit effects similar to those in the foregoing exemplary embodiments.

### (Twelfth Exemplary Embodiment)

FIG. 18 is a block diagram showing a configuration of the moving image distribution system according to an exemplary embodiment of the present invention. In this exemplary embodiment, the delivery server 1101 is connected through the transmission path 1104 to the converter 1401, and the terminal 1103 is connected through the transmission path 1105 to the converter 1401.

The converter 1401 of this exemplary embodiment comprises the first transmitter-receiver 1106, the DTMF detection unit 11107, the capability information exchange unit 1002, the syntax conversion transcoder 1000, and the second transmitter-receiver 1108.

The moving image distribution system of this exemplary embodiment differs in having the capability information exchange unit 1002 and the syntax conversion transcoder 1000, used in the foregoing exemplary embodiment shown in FIG. 21, in place of the capability information exchange unit 108 and the syntax conversion transcoder 200 of the converter 1102 of the foregoing exemplary embodiment shown in FIG. 15.

Operations by the DTMF detection unit 1107 for selecting the moving image data to be distributed, and operations by the syntax conversion transcoder 1000 for syntax conversion of streams are same as those in the foregoing exemplary embodiments, so that the explanation will not be repeated.

The moving image distribution system of this exemplary embodiment can exhibit effects similar to those in the foregoing exemplary embodiments.

### (Thirteenth Exemplary Embodiment)

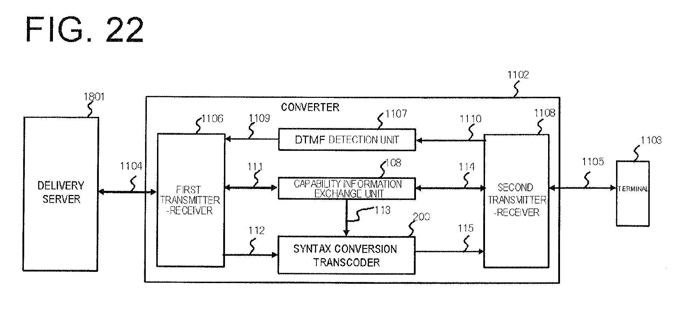

FIG. 22 is a block diagram showing a configuration of the moving image distribution system according to an exemplary embodiment of the present invention. When the terminal 1103 selects at least one stream using the DTMF signal 1110, the moving image distribution system of this exemplary embodiment distributes the streams describing at least one information selected from image, sound and text prompting stream selection using the DTMF signal, or at least one information selected from image, sound and text allowing changing to a selection screen of the next stream.

The delivery server 1801 shown in FIG. 22 sends the moving image data and the moving image data expressing the DTMF signal 1110 received from the terminal 1103 to the terminal 1103, so as to allow a user of the terminal 1103 to select the stored moving image data using the DTMF signal 1110.

The delivery server 1801 has a selection screen presentation unit (not shown) presenting a selection screen containing at least one information selected from image, sound and text prompting stored streams selection to the terminal 1103. The terminal 1103 has a display unit (not shown) allowing display of the selection screen presented by the delivery server 1801. The selection screen presentation unit of the delivery server 1801 sends the selection screen to the terminal 1103 through the converter 1102.

If the number of moving image data stored in the delivery server 1801 is larger than the number of types (16 types) of the DTMF signal 1110, the terminal 1103 sends the moving image data expressing the DTMF signal 1110 used for selecting the moving image data and the DTMF signal 1110 allowing changing to a selection screen of the next or previous selection screen. In other words, the selection screen presentation unit prepares a plurality of selection screens, and presents them to the terminal 1103.

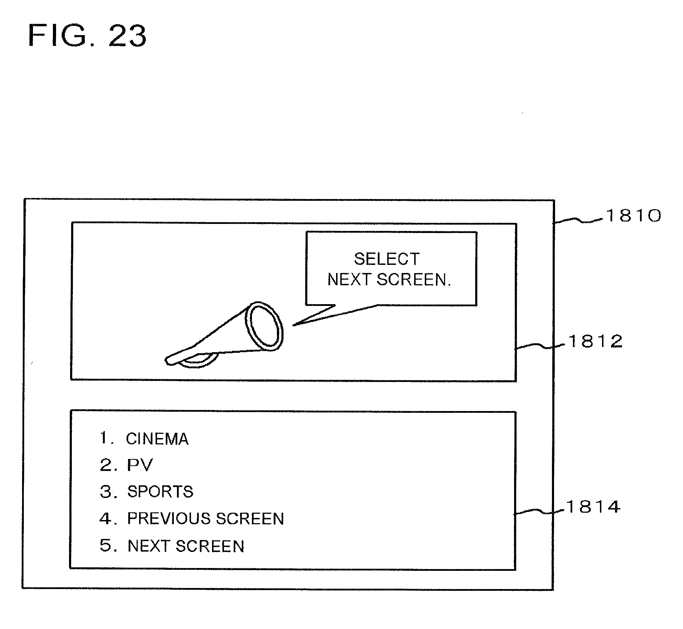

FIG. 23 shows an example of the selection screen. The selection screen 1810 shown in FIG. 23 includes a message section 1812 outputting a message selecting a screen from a plurality of selection screens, and a selected screen display section 1814. The selected screen display section 1814 shown in FIG. 23 shows a list in which each genre of moving image data is corresponded to a numeral. For selection of still other genre, the user can enter a numeral such as "4" and "5", to thereby change over the selection screen. It is also allowable for the selection screen 1810 to output, not only image-assisted guidance, but also sound-assisted guidance.

In this exemplary embodiment, distribution of the moving image data selected on the selection screen of the terminal 1103 is requested to the delivery server 1801, and thereafter the moving image data is distributed to the terminal 1103, based on operations similar to those in the foregoing exemplary embodiments.

### (Fourteenth Exemplary Embodiment)

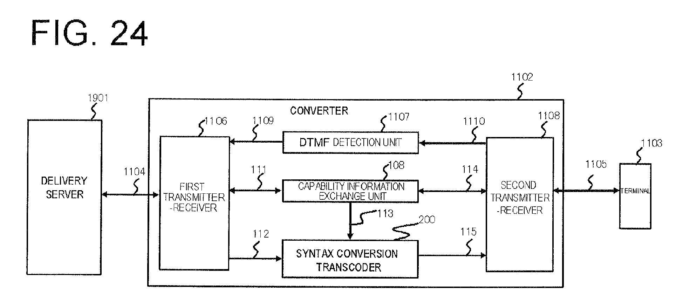

FIG. 24 is a block diagram showing a configuration of the moving image distribution system according to an exemplary embodiment of the present invention. When at least one stream selected by the terminal 1103 is distributed, the moving image distribution system of this exemplary embodiment distributes a stream describing at least one information selected from image, sound and test expressing commercial or advertisement before or after the stream.

The delivery server 1901 shown in FIG. 24 distributes, to the terminal 1103, the moving image data expressing commercial or advertisement, before or after the moving image data requested by the terminal 1103 is distributed. Distribution procedures of the moving image data are similar to those in the foregoing exemplary embodiments, so that the explanation will not be repeated.

### (Fifteenth Exemplary Embodiment)

The moving image distribution system according to an exemplary embodiment of the present invention differs from the foregoing exemplary embodiments in that the network is a PS network, in place of CS network. For example, the transmission path 104, the transmission path 105, and the transmission path 106 in the foregoing exemplary embodiment shown in FIG. 1 are configured as PS networks in this exemplary embodiment.

The converter 102 receives, from the terminal 103, the capability information typically according to the IETF recommendation SDP protocol, and posts the capability information of a unique moving image data preliminarily by the converter 102 to the terminal 103. The capability information of the moving image data sent by the converter 102 to the terminal 103 will now be referred to as coding information. DCI is one example of the coding information.

The first transmitter-receiver 107 receives, through the transmission path 104, the decoding information of the moving image data sent from the delivery server 101 typically according to the IETF recommendation SDP protocol, and sends it to the capability information exchange unit 108 through the transmission path 104. The first transmitter-receiver 107 receives the moving image data from the delivery server 101, and sends it to the syntax conversion transcoder 200.

The capability information exchange unit 108 exchanges the capability information with the terminal 103 typically according to the IETF recommendation SDP protocol. When information on the transmission path 105 allowing connection with the converter 102 is sent from the delivery server 101 to the terminal 103 through the transmission path 106 in the present exemplary embodiment, route information included in the sent information may contain an IP address of the converter 102, for example.

The foregoing paragraphs have described exemplary embodiment of the present invention referring to the attached drawings, merely as examples of the present invention, allowing adoption of various configurations other than those described in the above.

For example, the moving image distribution system of the foregoing example shown in FIG. 13 has the transmission path 903 configured as a CS network, whereas a PS network is also allowable. The moving image distribution systems of the foregoing embodiments shown in FIG. 15, FIG. 16, FIG. 18, FIG. 22, and FIG. 24 have the transmission path 1105 configured as a CS network, whereas a PS network is also allowable. Moreover, the moving image distribution system of the foregoing example shown in FIG. 17 has the transmission path 1303 configured as a CS network, whereas a PS network is also allowable. In the individual embodiments, the method of capability exchange is similar to that described above in the fifteenth exemplary embodiment.

In the above-described moving image distribution system, the converter can convert a syntax of a stream using the moving image transcoder having at least one of a conversion control unit judging necessity of conversion of streams based on the capability information, a switch changing over necessity of conversion based on information received from the conversion control unit, a parameter value conversion unit rewriting parameters, a variable length decoder variable-length decoding the streams, a parameter sequence conversion unit re-sequencing the parameters, a variable length coder executing variable-length coding process, a bit-position-shifting and byte-aligning unit executing bit-position-shifting process for input coding bit stream and byte-aligning process, and a header judging unit extracting header of the streams.
It is apparent that the present invention is not limited to the above exemplary embodiment, that may be modified and changed without departing from the scope and spirit of the invention.

Though the configurations of the present invention have been explained as described above, the present invention includes the following aspects;
(1) According to the present invention, there is provided a moving image distribution system for distributing one or more streams through a network to a terminal, including:
   a converter configured to posting a preliminarily determined capability information to the terminal side, and receiving at least one stream from a delivery server having streams stored therein, or receiving a plurality of streams from a plurality of delivery servers, and converting a syntax of the streams so as to adapt it to the capability information, and then sending the streams through the network to the terminal.
(2) According to the present invention, there is provided a moving image distribution system for distributing one or more streams through a network to a terminal, including:
   a converter configured to posting a capability information specified by a delivery server having streams stored therein, and receiving at least one stream from the delivery server, or receiving a plurality of streams from a plurality of delivery servers, and converting a syntax of the stream so as to adapt it to the capability information, and then transmitting the at least one stream through the network to the terminal.
(3) According to the present invention, there is provided a moving image distribution system for distributing one or more streams through a network to a terminal, including:
   a converter configured to posting a capability information specified by the terminal to the terminal, and receiving at least one stream from a delivery server having streams stored therein, or receiving a plurality of streams from a plurality of delivery servers, and converting a syntax of the streams so as to adapt it to the capability information, and then sending the streams through the network to the terminal.
(4) According to the present invention, there is provided a moving image distribution system for distributing one or more streams through a network to a terminal, including:
   a converter configured to posting a predetermined capability information to the terminal side, detecting a DTMF signal sent from the terminal, and selecting among streams from the delivery server according to the DTMF signal, receiving at least one selected stream or receiving a plurality of selected streams from a plurality of delivery servers, converting a syntax of the streams so as to adapt it to the capability information, and then sending the streams through the network to the terminal.
(5) According to the present invention, there is provided a moving image distribution system for distributing one or more streams through a network to a terminal, including:
   a converter configured to posting a capability information specified by a delivery server having streams stored therein, detecting a DTMF signal sent from the terminal, and receiving from the delivery server at least one stream specified by the DTMF signal, or receiving a plurality of streams from a plurality of delivery servers, converting a syntax of the at least one stream so as to adapt it to the capability information, and then transmitting the stream through the network to the terminal.
(6) According to the present invention, there is provided a moving image distribution system for distributing one or more streams through a network to a terminal, including:
   a converter configured to posting a capability information specified by the terminal to the terminal, detecting a DTMF signal sent from the terminal, and receiving from the delivery server at least one stream specified by the DTMF signal, or receiving a plurality of streams from a plurality of delivery servers, converting a syntax of the streams so as to adapt it to the capability information, and then sending the streams through the network to the terminal.
(7) The moving image distribution system as described in any one of (1) through (6), wherein the network may be a circuit switched network. Furthermore, the moving image distribution system as described in any one of (1) through (6), wherein the network may be a packet exchange network.
(8) The moving image distribution system as described in any one of (1) through (7), wherein the capability information may be posted to the terminal when connection is requested by the terminal. Furthermore, the moving image distribution system as described in any one of (1) through (7), wherein the capability information may be posted to the terminal before moving image is distributed to the terminal.

## Claims

1. A moving image distribution system for distributing one or more streams through a network to a terminal, comprising:
a converter configured to posting a predetermined capability information to said terminal side, and receiving at least one stream from a delivery server having streams stored therein, or receiving a plurality of streams from a plurality of delivery servers, and converting a syntax of said streams so as to adapt it to said capability information, and then sending said streams through said network to said terminal.

2. The moving image distribution system as claimed in claim 1, wherein the streams received from said delivery server include
at least one of stream which are received by detecting a DTMF signal transmitted from said terminal, to select at least one of the streams from among streams received from the delivery server according to said DTMF signal, or
a plurality of the streams which are received from a plurality of delivery servers.

3. The moving image distribution system as claimed in claim 2, configured as distributing, when said terminal selects at least one stream using the DTMF signal, a stream describing at least one information selected from image, sound and text prompting stream selection using said DTMF signal, or at least one information selected from image, sound and text allowing changing to a selection screen of the next stream.

4. The moving image distribution system as claimed in any one of claims 1 to 3, wherein said predetermined capability information is specified by said delivery server having streams stored therein.

5. The moving image distribution system as claimed in any one of claims 1 to 3, wherein said predetermined capability information is specified by said terminal.

6. The moving image distribution system as claimed in any one of claims 1 to 5, configured as distributing, when said terminal distributes at least one selected stream, a stream describing at least one information selected from image, sound and text expressing commercial or advertisement before or after said stream.

7. The moving image distribution system as claimed in any one of claims 1 to 6, wherein said converter converts a syntax of said streams using a moving image transcoder, said moving image transcoder comprising:
a conversion control unit that judges necessity of conversion of said streams based on said capability information;
a switch that changes over necessity of conversion of said stream based on information received from said conversion control unit;
a variable length decoder that executes variable-length decoding of said streams;
a parameter sequence conversion unit that re-sequences parameters; and
a variable length coder that executes variable-length coding process.

8. The moving image distribution system as claimed in any one of claims 1 to 6, wherein said converter converts a syntax of said streams using a moving image transcoder, said moving image transcoder comprising:
a conversion control unit that judges necessity of conversion of said streams based on said capability information;
a switch that changes over necessity of conversion of said streams based on information received from said conversion control unit;
a parameter value conversion unit that rewrites parameters;
a bit-position-shifting and byte-aligning unit that executes bit-position-shifting process for input coded bit stream and byte-aligning process; and
a header judging unit that extracts header of said streams.

9. The moving image distribution system as claimed in any one of claims 1 to 6, wherein said converter converts a syntax of said streams using a moving image transcoder, said moving image transcoder comprising:
a conversion control unit that judges necessity of conversion of said streams based on said capability information;
a switch that changes over necessity of conversion of said streams based on information received from said conversion control unit;
a parameter value conversion unit that rewrites parameters;
a variable length decoder that executes variable-length decoding of said streams;
a parameter sequence conversion unit that re-sequences the parameters;
a variable length coder that executes variable-length coding process;
a bit-position-shifting and byte-aligning unit that executes bit-position-shifting process for input coding bit stream and byte-aligning process; and
a header judging unit that extracts header of said streams.

10. The moving image distribution system as claimed in any one of claims 1 to 6, wherein said converter converts a syntax of said streams using a moving image transcoder, said moving image transcoder having at least one of:
a conversion control unit that judges necessity of conversion of said streams based on said capability information;
a switch that changes over necessity of conversion of said streams based on information received from said conversion control unit;
a parameter value conversion unit that rewrites parameters;
a variable length decoder that executes variable-length decoding of said streams;
a parameter sequence conversion unit that re-sequences the parameters;
a variable length coder that executes variable-length coding process;
a bit-position-shifting and byte-aligning unit that executes bit-position-shifting process for input coding bit stream and byte-aligning process; and
a header judging unit that extracts header of said streams.

11. A converter configured to posting a predetermined capability information to a terminal side, and receiving at least one stream from a delivery server having streams stored therein, or receiving a plurality of streams from a plurality of delivery servers, and converting a syntax of said streams so as to adapt it to said capability information, and then sending said streams through said network to said terminal.

12. The converter as claimed in claim 11, wherein said predetermined capability information is specified by said delivery server having streams stored therein.

13. The converter as claimed in claim 11, wherein said predetermined capability information is specified by said terminal to said terminal.

14. The converter as claimed in any one of claims 11 to 13, wherein the streams received from said delivery server include at least one selected stream which are received by detecting a DTMF signal sent from said terminal, and selecting among streams from the delivery server according to said DTMF signal, or a plurality of selected streams which are received from a plurality of delivery servers.

15. The converter as claimed in any one of claims 11 to 14, wherein said converter comprising:
a conversion control unit that judges necessity of conversion of said streams based on said capability information;
a switch that changes over necessity of conversion of said stream based on information received from said conversion control unit;
a variable length decoder that executes variable-length decoding of said streams;
a parameter sequence conversion unit that re-sequences parameters; and
a variable length coder that executes variable-length coding process.

16. The converter as claimed in any one of claims 11 to 14, wherein said converter comprising:
a conversion control unit that judges necessity of conversion of said streams based on said capability information;
a switch that changes over necessity of conversion of said streams based on information received from said conversion control unit;
a parameter value conversion unit that rewrites parameters;
a bit-position-shifting and byte-aligning unit that executes bit-position-shifting process for input coded bit stream and byte-aligning process; and
a header judging unit that extracts header of said streams.

17. The converter as claimed in any one of claims 11 to 14, wherein said converter comprising:
a conversion control unit that judges necessity of conversion of said streams based on said capability information;
a switch that changes over necessity of conversion of said streams based on information received from said conversion control unit;
a parameter value conversion unit that rewrites parameters;
a variable length decoder that executes variable-length decoding of said streams;
a parameter sequence conversion unit that re-sequences the parameters;
a variable length coder that executes variable-length coding process;
a bit-position-shifting and byte-aligning unit that executes bit-position-shifting process for input coding bit stream and byte-aligning process; and
a header judging unit that extracts header of said streams.

18. The converter as claimed in any one of claims 11 to 14, wherein said converter having a moving image transcoder having at least one of:
a conversion control unit that judges necessity of conversion of said streams based on said capability information;
a switch that changes over necessity of conversion of said streams based on information received from said conversion control unit;
a parameter value conversion unit that rewrites parameters;
a variable length decoder that executes variable-length decoding of said streams;
a parameter sequence conversion unit that re-sequences the parameters;
a variable length coder that executes variable-length coding process;
a bit-position-shifting and byte-aligning unit that executes bit-position-shifting process for input coding bit stream and byte-aligning process; and
a header judging unit that extracts header of said streams.
